# EUROPÄISCHE PATENTSCHRIFT

(11) **EP 3 418 513 B1**
(45) Veröffentlichungstag und Bekanntmachung des Hinweises auf die Patenterteilung: **24.02.2021**
(21) Anmeldenummer: 18175687.5
(22) Anmeldetag: 04.06.2018
(51) Int. Cl.: F01L 1/26, F01L 1/047, F01L 13/00, F01L 1/18, F01L 1/24, F01L 1/344, F01L 1/46

(54) **KRAFTÜBERTRAGUNGSVORRICHTUNG**
POWER TRANSMISSION DEVICE
DISPOSITIF DE TRANSMISSION DE FORCE

(30) Priorität: 21.06.2017 DE 102017113783
(43) Veröffentlichungstag der Anmeldung: 26.12.2018
(73) Patentinhaber: MAN Truck & Bus SE, 80995 München (DE)
(72) Erfinder: Bogdanski, Peter, 91126 Schwabach (DE)
(74) Vertreter: v. Bezold & Partner Patentanwälte - PartG mbB

(56) Entgegenhaltungen:
- EP-A1- 1 881 166
- EP-A1- 2 672 092
- DE-A1- 10 224 036
- DE-A1- 19 608 651
- DE-A1- 19 914 046
- DE-A1-102007 051 302
- DE-A1-102008 047 501
- JP-A- S54 159 520
- JP-A- S60 228 714
- US-A1- 2005 098 135

## Beschreibung

Die Erfindung betrifft eine Kraftübertragungsvorrichtung, insbesondere einen Kipphebel oder einen Schlepphebel, zum Herstellen einer Wirkverbindung zwischen einer Nockenwelle und einem Gaswechselventil.

Es ist allgemein bekannt, variable Ventiltriebe zum Verändern von Schaltzeiten und Ventilhüben von Gaswechselventilen einer Brennkraftmaschine während des Betriebs der Brennkraftmaschine zu verwenden. Im Stand der Technik ist eine Vielzahl von variablen Ventiltrieben bekannt.

Die DE 10 2011 052 246 A1 offenbart eine integrierte Variables-Ventil-Aktuator-Vorrichtung einer variabler-Ventilhub-Vorrichtung. Die Vorrichtung weist einen Kipphebel, der an einer Kipphebelwelle rotiert und eine Ölzuführleitung aufweist, welche selektiv Öl bereitstellt, auf. Die Vorrichtung weist eine Befestigungsvorrichtung, die eine Seite des Kipphebels durchdringt und Öl, dass von der Ölzuführleitung zugeführt wird durch eine Ölpassage ausgibt, auf. Die Vorrichtung weist eine Ventilbrücke, die unten an der Befestigungsvorrichtung angeordnet ist und Ventile unter Druck setzt, auf. Die Vorrichtung weist eine Aktuatorvorrichtung mit einem Aktuatorkolben, der in die Ventilbrücke eingesetzt ist und mit einer Ölzuführpassage ausgebildet ist, auf. Die Vorrichtung weist eine Aktuatorfeder, die in den Aktuatorkolben eingesetzt ist und die den Aktuatorkolben mit einer Elastikkraft beaufschlagt, auf. Die Vorrichtung weist eine Variable-Steuerung-Vorrichtung, die unten am Aktuatorkolben angeordnet ist und die die Höhen des Aktuatorkolbens einstellt durch eine Bewegung, die durch den Hydraulikdruck des Öls, der von der Ölzuführpassage zugeführt wird, erzeugt wird, auf.

Die DE 10 2005 040 649 A1 offenbart einen variablen Ventiltrieb für ein von einem Nocken betätigtes Gaswechselventil einer Brennkraftmaschine, mit einer zwischen dem Nocken und dem Gaswechselventil angeordneten Kraftübertragungsvorrichtung, die eine hydraulische Hubeinrichtung mit einem in einem Zylinder längsverschiebbaren Druckkolben umfasst, welcher einen an eine Druckmittelversorgung der Brennkraftmaschine angeschlossenen Druckraum begrenzt und unter Hochdruckbeaufschlagung eine vom Nocken unabhängige Betätigung des Gaswechselventils ermöglicht. Dabei soll die Kraftübertragungsvorrichtung als auf einer Hebelachse drehbar gelagerter Schwing- oder Kipphebel ausgebildet sein, wobei die Hebelachse einen Druckmittel führenden Längskanal als Verbindungsstrecke zwischen der Druckmittelversorgung und dem Druckraum aufweist.

Die US 6,422,186 B1 offenbart ein System zum Betätigen eines Ventils einer Brennkraftmaschine. Das System weist einen Kipphebel mit einer Kolbenvertiefung auf. In der Kolbenvertiefung ist ein Leerwegkolben verschiebbar gelagert.

Die EP 1 881 166 A1 schlägt einen schaltbaren Ventiltrieb für eine Brennkraftmaschine vor, mit einer Reihe von sich in Längsrichtung eines Zylinderkopfes erstreckenden Kipphebeln, die über eine Ausnehmung an ihrer Oberseite an einem Kopf eines Lagerbolzens verlaufen, der axial beweglich in einer Bohrung eines darüber verlaufenden Trägers angeordnet ist. Kolbenartige Koppelmittel zur wahlweisen Kopplung des Lagerbolzen mit dem Träger sind vorgesehen. Im ausgefahrenen Zustand des beweglichen Lagerbolzens bei Kopplung wird ein großer und bei Entkopplung ein demgegenüber kleinerer oder 0-Ventilhub generiert. Der jeweilig bewegliche Lagerbolzen ist über eine Lost-Motion-Feder aus seiner Bohrung heraus beaufschlagt.

Die JP S60 228714 A offenbart einen Ventiltrieb zum Verlängern einer Öffnungszeit eines Ventils, um die Ansaugleistung eines Motors zu verbessern. Ein Dämpfer, der durch Öl, das von einer Schmierölpumpe zugeführt wird, gesteuert ist, ist in einem Schaft des Ventils vorgesehen und eine Schließgeschwindigkeit des Ventils wird verringert, wenn der Motor mit einer hohen Geschwindigkeit angetrieben wird.

Weitere Ventiltriebe sind bspw. aus der EP 1 087 109 A2, der DE 199 15 531 A1 und der EP 0 255 668 A2, der DE 10 2008 047501 A1, der DE 199 14 046 A1, der DE 10 2007 051302 A1 und der DE 196 08 651 A1 bekannt.

Der Erfindung liegt die Aufgabe zu Grunde, eine alternative oder verbesserte Kraftübertragungsvorrichtung für einen variablen Ventiltrieb zu schaffen. Insbesondere soll eine Kraftübertragungsvorrichtung geschaffen werden, die eine zuverlässige und einfache Veränderung eines Ventilhubs eines Gaswechselventils ermöglicht.

Die Aufgabe wird gelöst durch eine Kraftübertragungsvorrichtung gemäß dem unabhängigen Anspruch. Vorteilhafte Weiterbildungen sind in den abhängigen Ansprüchen und der Beschreibung angegeben.

Die Kraftübertragungsvorrichtung kann insbesondere als Kipphebel oder Schlepphebel ausgebildet sein. Die Kraftübertragungsvorrichtung ist zum Herstellen einer Wirkverbindung zwischen einer Nockenwelle und einem Gaswechselventil, insbesondere Einlassventil, einer Brennkraftmaschine, vorgesehen. Die Kraftübertragungsvorrichtung weist einen Hauptkörper mit einer, insbesondere zylindrischen, Aufnahme, die sich entlang einer Längsachse erstreckt, auf. Die Kraftübertragungsvorrichtung weist einen, insbesondere hydraulischen, Stellkolben, der hin- und herbewegbar zwischen einer ersten Position und einer zweiten Position entlang der Längsachse in der Aufnahme vorgesehen ist, auf. Die Kraftübertragungsvorrichtung weist einen Kontaktkörper zum Betätigen des Gaswechselventils, der mit dem Stellkolben so in Wirkverbindung steht, dass eine Bewegung des Stellkolbens entlang der Längsachse zu einer Bewegung des Kontaktkörpers entlang der Längsachse zum (bspw. zweistufigen) Verändern eines Ventilhubs des Gaswechselventils führt, auf. Die Kraftübertragungsvorrichtung weist einen ersten, insbesondere hydraulischen, Sperrkolben auf. Der erste Sperrkolben ist in einer Radialrichtung bezüglich der Längsachse hin- und herbewegbar zwischen einer dritten Position, in der der erste Sperrkolben den Stellkolben in der ersten Position sperrt, und einer vierten Position, in der der erste Sperrkolben eine Bewegung des Stellkolbens zwischen der ersten Position und der zweiten Position freigibt, in der Aufnahme vorgesehen.

Die Kraftübertragungsvorrichtung ermöglicht das selektive Schalten zwischen zwei verschiedenen Ventilhüben. In einer ersten Schaltstellung ist eine Bewegung des Stellkolbens gesperrt. In einer zweiten Schaltstellung vollführt der Stellkolben einen Leerweg, um den der Ventilhub verringert wird.

Insbesondere kann die Aufnahme eine Bodenbereich aufweisen, an dem der Stellkolben in der zweiten Position anliegt und/oder mit einem elastischen Element abgestützt ist.

Vorzugsweise kann der Stellkolben zusätzlich einen Entlüftungskanal aufweisen, der mit einem Steuerfluidraum des Stellkolbens zum Entlüften von Kleinstmengen in Fluidverbindung steht.

Es ist auch möglich, dass die Kraftübertragungsvorrichtung eine Wirkverbindung zwischen einer Nockenwelle und einem Auslassventil herstellt.

In einer besonders bevorzugten Ausführungsform weist die Kraftübertragungsvorrichtung einen zweiten, insbesondere hydraulischen, Sperrkolben auf. Der zweite Sperrkolben liegt dem ersten Sperrkolben insbesondere gegenüber. Der zweite Sperrkolben ist in einer Radialrichtung bezüglich der Längsachse hin- und herbewegbar zwischen einer fünften Position, in der der zweite Sperrkolben den Stellkolben in der ersten Position sperrt, und einer sechsten Position, in der der zweite Sperrkolben eine Bewegung des Stellkolbens zwischen der ersten Position und der zweiten Position freigibt, in der Aufnahme vorgesehen. Mithilfe der zwei Sperrkolben kann der Stellkolben sicherer als mit nur einem Sperrkolben in einer ersten Position gesperrt werden, wenn dies gewünscht ist.

Insbesondere können der erste Sperrkolben und der zweite Sperrkolben so vorgesehen sein, dass sie sich nur gemeinsam bzw. gleichzeitig bewegen.

In einem Ausführungsbeispiel ermöglicht (bewirkt) das Sperren des Stellkolbens in der ersten Position einerseits und das Freigegeben der Verschiebung des Stellkolbens zwischen der ersten Position und der zweiten Position andererseits eine zweistufige Ventilhubvariabilität zum Erzeugen von zwei unterschiedlichen Ventilhubverläufen des Gaswechselventils.

In einem weiteren Ausführungsbeispiel ist der Stellkolben elastisch vorgespannt in einer Richtung zu der ersten Position. Alternativ oder zusätzlich ist der erste Sperrkolben elastisch vorgespannt in einer Richtung zu der dritten Position. Alternativ oder zusätzlich ist der zweite Sperrkolben elastisch vorgespannt in einer Richtung zu der fünften Position. Alternativ oder zusätzlich sind der erste Sperrkolben und der zweite Sperrkolben elastisch gegeneinander abgestützt. Die elastische Vorspannung der Kolben ermöglicht die Realisierung einer Fail-safe-Funktion, bei der die Kolben in einer für den Betrieb sicheren Stellung festgelegt sind.

In einem bevorzugten Ausführungsbeispiel weist die Aufnahme eine Nut, insbesondere eine zylindrische Umfangsnut um die Längsachse, auf. Der erste Sperrkolben ist in der dritten Position in der Nut gelagert, sodass eine Bewegung des ersten Sperrkolbens (und somit des Stellkolbens) entlang der Längsachse gesperrt ist. Der erste Sperrkolben ist in der vierten Position außerhalb der Nut gelagert ist, sodass eine Bewegung des ersten Sperrkolbens (und somit des Stellkolbens) entlang der Längsachse freigegeben ist. Alternativ oder zusätzlich ist der zweite Sperrkolben in der fünften Position in der Nut gelagert, sodass eine Bewegung des zweiten Sperrkolbens (und somit des Stellkolbens) entlang der Längsachse gesperrt ist. Der zweite Sperrkolben ist in der vierten Position außerhalb der Nut gelagert, sodass eine Bewegung des ersten Sperrkolbens (und somit des Stellkolbens) entlang der Längsachse freigegeben ist.

In einer Ausführungsvariante vollführt der Stellkolben bei Beaufschlagung des Stellkolbens über den Kontaktkörper in einer Richtung entlang der Längsachse zu der zweiten Position einen Leerweg von der ersten Position zu der zweiten Position, wenn der erste Sperrkolben und/oder der zweite Sperrkolben die Bewegung des Stellkolbens zwischen der ersten Position und der zweiten Position freigibt. Der Ventilhub des Gaswechselventils verringert sich um diesen Leerweg.

In einer weiteren Ausführungsvariante ist der erste Sperrkolben, insbesondere hydraulisch durch Zuführen eines Steuerfluids, zum Bewegen von der dritten Position zu der vierten Position beaufschlagbar. Alternativ oder zusätzlich ist der zweite Sperrkolben, insbesondere hydraulisch durch Zuführen eines Steuerfluids, zum Bewegen von der fünften Position zu der sechsten Position beaufschlagbar.

Vorzugsweise kann die Kraftübertragungsvorrichtung einen Steuerfluidzuführungskanal aufweisen, der in die Nut, in der der erste Sperrkolben in der dritten Position und/oder der zweite Sperrkolben in der fünften Position gelagert ist, mündet.

Insbesondere kann die Kraftübertragungsvorrichtung eine Steuerfluidversorgung aufweisen, in der vorzugsweise ein Schaltventil und/oder Rückschlagventil vorgesehen ist.

In einer Weiterbildung ist der erste Sperrkolben und/oder der zweite Sperrkolben in oder an dem Stellkolben in der Radialrichtung bezüglich der Längsachse geführt.

Der erste Sperrkolben ist in einem Steuerfluidraum des Stellkolbens bewegbar in einer Radialrichtung bezüglich der Längsachse der Aufnahme vorgesehen. Der zweite Sperrkolben kann in einem Steuerfluidraum des Stellkolbens bewegbar in der Radialrichtung bezüglich der Längsachse der Aufnahme vorgesehen sein.

In einer Ausführungsform ist nur bei im Wesentlichen kraftfreier Wirkverbindung von der Nockenwelle über die Kraftübertragungsvorrichtung zu dem Gaswechselventil eine Bewegung des ersten Sperrkolbens und/oder des zweiten Sperrkolbens in der Radialrichtung bezüglich der Längsachse freigegeben. Damit kann eine Bewegung der Sperrkolben zu der fünften oder sechsten Position nur im Grundkreisbereich des Nockens stattfinden.

In einer weiteren Ausführungsform ist bei Beaufschlagung des ersten Sperrkolbens und/oder des zweitens Sperrkolbens (z. B. während der Ventilhubbereich des Nockens in Wirkverbindung mit der Kraftübertragungsvorrichtung steht) über den Kontaktkörper in einer Richtung entlang der Längsachse zu der zweiten Position, eine Bewegung des ersten Sperrkolbens aus der dritten Position in die vierte Position und/oder des zweiten Sperrkolbens aus der fünften Position in die sechste Position gesperrt. Die Bewegung ist insbesondere durch eine aufgrund der Ventilöffnungskraft bewirkte Haftreibung des ersten Sperrkolbens und/oder des zweiten Sperrkolbens an der Nut gesperrt.

In einer weiteren Ausführungsvariante weist die Kraftübertragungsvorrichtung eine Steuerfluidversorgung und eine separat dazu vorgesehene Schmierfluidversorgung auf. Damit kann unabhängig davon, ob eine Steuerfluidzuführung aktiv geschaltet ist, eine Schmierung durchgeführt werden.

Die Kraftübertragungsvorrichtung weist eine mit einem Steuerfluid füllbare Dämpfungskammer auf, die bei Bewegung des Stellkolbens von der ersten Position zu der zweiten Position, insbesondere unter Erzeugung einer turbulenten Strömung, zum Dämpfen der Bewegung des Stellkolbens entleert wird, wobei, vorzugsweise, die Dämpfungskammer von dem Stellkolben und der Aufnahme begrenzt wird. Damit kann ein weicher Ventilhubeinlauf gewährleistet werden.

Die Dämpfungskammer steht mit einem Steuerfluidraum des Stellkolbens über mindestens einen Kanal in Fluidverbindung.

Vorzugsweise kann sich die Dämpfungskammer bei Bewegung des Stellkolbens von der zweiten Position in die erste Position, bei Bewegung des ersten Sperrkolbens von der dritten Position in die vierte Position und/oder bei Bewegung des zweiten Sperrkolbens von der fünften Position in die sechste Position mit Steuerfluid aus einem Steuerfluidraum des Stellkolbens und/oder von einer Steuerfluidzuführung füllen.

Bevorzugt kann die Dämpfungskammer zwischen einem Bodenbereich der Aufnahme, einer Umfangswandfläche der Aufnahme und dem Stellkolben begrenzt sein.

In einer weiteren Ausführungsform weist die Kraftübertragungsvorrichtung eine Verdrehsicherung, die eine Verdrehung des ersten Sperrkolbens und/oder des zweiten Sperrkolbens (z. B. um die Radialrichtung bezüglich der Längsachse) sperrt, auf.

In einer besonders bevorzugten Ausführungsform weist die Kraftübertragungsvorrichtung eine, insbesondere hydraulische oder mechanische, Ventilspielausgleichseinrichtung auf, die in Wirkverbindung mit dem Stellkolben und dem Kontaktkörper zum Ausgleichen eines Ventilspiels am Kontaktkörper angeordnet ist.

Vorzugsweise kann die Ventilspielausgleichseinrichtung als (sogenanntes) HVA-Element (hydraulisches Ventilspielausgleichselement) ausgebildet sein.

Insbesondere kann die Ventilspielausgleichseinrichtung entlang der Längsachse der Aufnahme bewegbar in der Aufnahme vorgesehen sein. Bevorzugt kann sich die Ventilspielausgleichseinrichtung entlang der Längsachse mit einer Bewegung des Stellkolbens und des Kontaktkörpers bewegen.

Bevorzugt kann ein Schmierfluidraum der Ventilspielausgleichseinrichtung in Fluidverbindung (beispielsweise über einen Entlüftungskanal) mit einem Steuerfluidraum des Stellkolbens stehen.

Die Erfindung betrifft zudem eine Verwendung der Kraftübertragungsvorrichtung wie hierin offenbart zum Erzeugen eines reduzierten Ventilhubs für mindestens ein Einlassventil oder Auslassventil, insbesondere in Kombination mit einem Nockenwellenphasenversteller für die Nockenwelle zum Erzeugen einer Millersteuerzeit (Steuerzeit mit vorgezogenem Schließzeitpunkt gegenüber einem Otto- oder Dieselkreisprozess) für mindestens ein Einlassventil.

Letztlich betrifft die Erfindung auch ein Kraftfahrzeug, insbesondere Nutzfahrzeug (z. B. Omnibus oder Lastkraftwagen), aufweisend die Kraftübertragungsvorrichtung wie hierin offenbart.

Es ist auch möglich, die Kraftübertragungsvorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Schnittansicht durch eine Kraftübertragungseinrichtung eines variablen Ventiltriebs mit einer Vorrichtung zum Anpassen eines Ventilhubs;
- Figur 2: eine perspektivische Außenansicht der Vorrichtung zum Anpassen eines Ventilhubs;
- Figur 3: einen Schnitt durch eine perspektivische Darstellung der Kraftübertragungseinrichtung ohne Vorrichtungen zum Anpassen eines Ventilhubs;
- Figur 4: eine schematische Ansicht einer Steuerfluidversorgung und einer Schmierfluidversorgung in der Kraftübertragungseinrichtung zum Zuführen zu den Vorrichtungen zum Anpassen eines Ventilhubs;
- Figur 5: einen Schnitt durch eine perspektivische Darstellung der Kraftübertragungsvorrichtung mit Vorrichtungen zum Anpassen eines Ventilhubs mit einem Steuer- oder Rückschlagventil;
- Figur 6: einen weiteren Schnitt durch eine perspektivische Darstellung der Kraftübertragungseinrichtung mit Vorrichtungen zum Anpassen eines Ventilhubs;
- Figur 7: eine Schnittansicht durch die Kraftübertragungseinrichtung mit einer aktivierten und betätigten Vorrichtung zum Anpassen eines Ventilhubs in Nockengrundkreisstellung;
- Figur 8: eine Schnittansicht durch die Kraftübertragungseinrichtung mit der aktivierten und betätigten Vorrichtung zum Anpassen eines Ventilhubs zu einem späteren Zeitpunkt verglichen mit der Figur 7 beim Ventilöffnungsvorgang;
- Figur 9: beispielhafte Ventilhubkurven, die mit der Vorrichtung zum Anpassen eines Ventilhubs erzielbar sind;
- Figur 10: eine Schnittansicht durch die Kraftübertragungseinrichtung mit einer Dämpfungseinrichtung zum sanften Ventilaufsetzen, einem Nockenwellenphasenversteller und einem Magnetventil; und
- Figur 11: eine Schnittansicht durch eine Kraftübertragungseinrichtung eines variablen Ventiltriebs mit einer alternativen Ausführungsform der Vorrichtung als starres Einstellelement zum Anpassen eines Ventilhubs.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

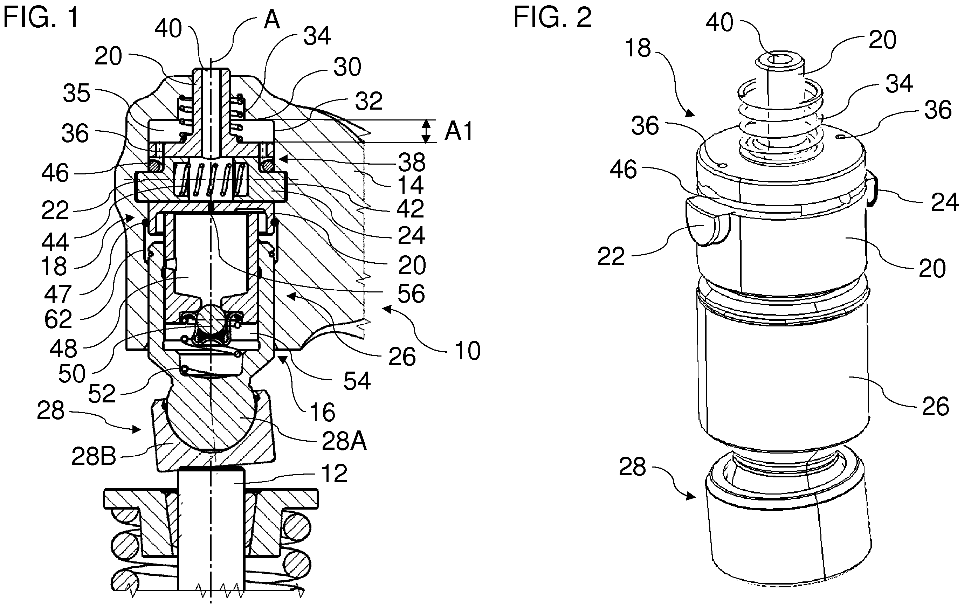

In Figur 1 ist ein Bereich einer Kraftübertragungsvorrichtung 10 dargestellt. Die Kraftübertragungsvorrichtung 10 ist insbesondere ein Kipphebel, kann allerdings beispielsweise auch ein Schlepphebel sein.

Die Kraftübertragungsvorrichtung 10 steht in Wirkverbindung zwischen einer Nockenwelle (nicht dargestellt) und einem abschnittsweise dargestellten Gaswechselventil 12. Insbesondere überträgt die Kraftübertragungsvorrichtung 10 eine Nockenkontur eines Nockens der Nockenwelle auf das Gaswechselventil 12. Hierbei wird eine Drehung der Nockenwelle in eine Hubbewegung des Gaswechselventils 12 gewandelt. Das Gaswechselventil 12 kann insbesondere ein Einlassventil sein. Es ist allerdings auch möglich, dass das Gaswechselventil ein Auslassventil ist.

Die Kraftübertragungsvorrichtung 10 weist einen abschnittsweise dargestellten Hauptkörper 14 auf. Der Hauptkörper 14 ist schwenkbar um eine Hebelachse (z. B. Kipphebelachse) gelagert. Der Hauptkörper 14 weist eine Aufnahme 16 im Bereich über einem Ventilschaft des Gaswechselventils 12 auf. Die Aufnahme 16 ist als eine im Wesentlichen zylinderförmige Vertiefung im Hauptkörper 14 ausgebildet. Die Aufnahme 16 erstreckt sich entlang einer Längsachse A in den Hauptkörper 14 hinein.

In der Aufnahme 16 ist eine Vorrichtung 18 zum zweistufigen Verändern eines Ventilhubs des Gaswechselventils 12 angeordnet.

Die Vorrichtung 18 weist einen Stellkolben 20, einen ersten Sperrkolben 22, einen zweiten Sperrkolben 24, eine hydraulische Ventilspielausgleichseinrichtung 26 und einen Kontaktkörper 28 auf.

Der Stellkolben 20 ist der Aufnahme 16 axial verschiebbar entlang der Längsachse A der Aufnahme 16 angeordnet. Im Einzelnen ist der Stellkolben 20 zwischen einer ersten Position, wie in Figur 1 dargestellt, und einer zweiten Position axial verschiebbar. In der zweiten Position kann der Stellkolben 20 teilweise an einem Bodenbereich 30 der Aufnahme 16 anliegen. Eine Umfangswandfläche 32 der Aufnahme 16 dient zur Axialführung des Stellkolbens 20. In dem in Figur 1 dargestellten Betriebszustand der Vorrichtung 18 ist eine Verschiebung des Stellkolbens 20 aus der ersten Position in die zweite Position durch die Sperrkolben 22, 24 gesperrt.

Der Stellkolben 20 ist in einer Richtung zu der ersten Position axial durch ein erstes elastisches Element 34 vorgespannt. Das erste elastische Element 34 kann beispielsweise eine Spiralfeder sein. Das erste elastische Element 34 kann zwischen dem Bodenbereich 30 und dem Stellkolben 20 angeordnet sein. Das erste elastische Element 34 kann den Stellkolben 20 an dem Bodenbereich 30 abstützen.

Der Stellkolben 20, der Bodenbereich 30 und die Umfangswandfläche 32 begrenzen eine ringförmige Dämpfungskammer 35. Die Dämpfungskammer 35 ist über mehrere Kanäle 36 mit einem Steuerfluidraum 38 des Stellkolbens 20 verbunden. Der Stellkolben 20 weist zusätzlich einen zentralen Entlüftungskanal 40 zum Entlüften des Steuerfluidraums 38 auf.

Der erste Sperrkolben 22 und der zweite Sperrkolben 24 sind in dem Steuerfluidraum 38 des Stellkolbens 20 verschiebbar gelagert und geführt. Im Einzelnen sind die Sperrkolben 22, 24 radial verschiebbar bezüglich einer Längsachse A der Aufnahme 16. In der in Figur 1 dargestellten Position des ersten Sperrkolbens 22 wird der erste Sperrkolben 22 an einem Absatz einer ersten Umfangsnut 42 der Aufnahme 16 abgestützt. Diese Position wird hierin zur besseren Unterscheidbarkeit von der ersten und zweiten Position des Stellkolbens 20 auch als dritte Position bezeichnet. Ebenso wird der zweite Sperrkolben 24 in der in Figur 1 dargestellten Position (nachfolgend auch als fünfte Position bezeichnet) an dem Absatz der ersten Umfangsnut 42 abgestützt. Diese Abstützung der Sperrkolben 22, 24 bewirkt eine Sperrung der Bewegung des Stellkolbens 20 aus der in Figur 1 dargestellten ersten Position in die zweite Position. Die erste Umfangsnut 42 erstreckt sich in einer Umfangsrichtung um die Längsachse A der Aufnahme 16 in der Umfangswandfläche 32.

Ein elastisches Element 44 stützt den ersten Sperrkolben 22 und den zweiten Sperrkolben 24 gegeneinander ab. Das elastische Element 44 kann beispielsweise als Spiralfeder ausgebildet sein. Das elastische Element 44 ist zwischen dem ersten Sperrkolben 22 und dem zweiten Sperrkolben 24 im Steuerfluidraum 38 angeordnet. Das elastische Element 44 spannt den ersten Sperrkolben 22 in einer Richtung zu der dritten Position und den zweiten Sperrkolben 24 in einer Richtung zu der fünften Position vor.

Die Sperrkolben 22, 24 sind hydraulisch mit einem Steuerfluid beaufschlagbar. Das Steuerfluid kann durch eine Zuführleitung (nicht dargestellt), die in die erste Umfangsnut 42 mündet, zugeführt werden. Eine Zuführung der Steuerfluids bewirkt, dass sich die Sperrkolben 22, 24 aufeinander zu bewegen, d. h. in einer Richtung zu der Längsachse A bewegen. Sobald die Sperrkolben 22, 24 nicht mehr an dem Absatz der ersten Umfangsnut 42 abgestützt werden, ist eine Bewegung des Stellkolbens 20 aus der ersten Position in die zweite Position freigegeben (nicht mehr gesperrt).

In einigen Ausführungsformen kann die Vorrichtung 18 nur einen Sperrkolben aufweisen, der über ein elastisches Element in einer Sperrstellung zum Sperren einer Bewegung des Stellkolbens vorgespannt ist.

Um eine Verdrehung der Sperrkolben 22, 24 um deren jeweilige Längsachse zu verhindern, ist eine oder mehrere Verdrehsicherungen 46 in Bogenform oder Bogensegmentform vorgesehen. Die Verdrehsicherung(en) 46 stützen die Sperrkolben 22, 24 verdrehsicher an dem Stellkolben 20 ab.

Die hydraulische Ventilspielausgleichseinrichtung 26 ist zwischen dem Stellkolben 20 und dem Kontaktkörper 28 angeordnet. Die Ventilspielausgleichseinrichtung 26 kann sich zusammen mit dem Stellkolben 20 entlang der Längsachse A der Aufnahme 16 bewegen, wenn die Sperrkolben 22, 24 eine solche Bewegung freigegeben.

Die Ventilspielausgleichseinrichtung 26 weist einen Schmierfluidraum48, eine Rückschlagkugel 50, eine Rückstellfeder 52 und einen Hochdruckraum 54 auf. Die Ventilspielausgleichseinrichtung 26 ist somit wie ein herkömmliches hydraulisches Ventilspielausgleichselement (sog. HVA-Element) ausgebildet, sodass deren Funktionsweise zum Ausgleichen eines variablen Spalts zwischen einem Kugelfuß 28A und einer Kugelaufnahme 28B des Kontaktkörpers 28 hierin nicht näher beschrieben ist. Durch Vorsehen der Ventilspielausgleichseinrichtung 26 muss das Ventilspiel nicht eingestellt werden. Es ist jedoch zu beachten, dass über ein herkömmliches Ventilspielausgleichselement hinaus die hierin verwendete Ventilspielausgleichseinrichtung 26 insbesondere verschiebbar mit dem Stellkolben 20 vorgesehen ist und der Schmierfluidraum 48 über einen Kanal 56 des Stellkolbens 20 mit dem Steuerfluidraum 38 verbunden ist.

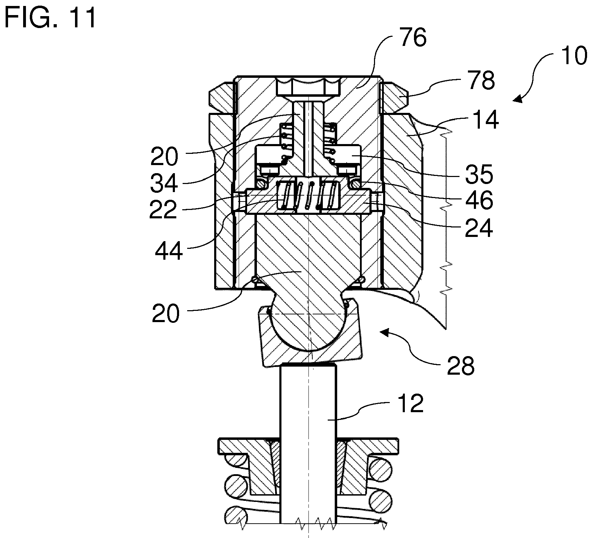

In einigen Ausführungsformen ist keine hydraulische Ventilspielausgleichseinrichtung umfasst (siehe beispielsweise Ausführungsform in Figur 11.

Die Figur 2 zeigt die Vorrichtung 18 in einer Außenansicht. Hier sind insbesondere der Stellkolben 20, die Sperrkolben 22 und 24, die hydraulische Ventilspielausgleichseinrichtung 26 und der Kontaktkörper 28 gut sichtbar.

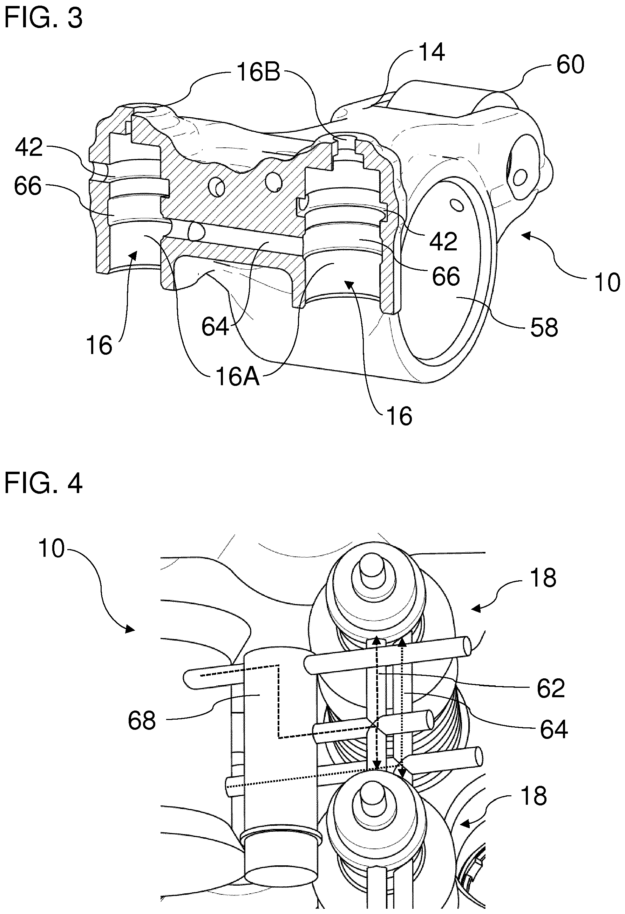

Die Figur 3 zeigt die Kraftübertragungsvorrichtung 10 als einen Kipphebel. Die Kraftübertragungsvorrichtung 10 weist zwei Aufnahmen 16 auf. Somit kann die Kraftübertragungsvorrichtung 10 zwei Vorrichtungen 18 (siehe Figuren 1 und 2) aufnehmen, mit denen der Ventilhub von zwei Gaswechselventilen 12 (siehe Figuren 1 und 2) zweistufig angepasst werden kann. Es ist allerdings auch möglich, mehrere Gaswechselventile mit nur einer Vorrichtung 18 zu betätigen. Die Vorrichtung 18 kann dann bspw. über eine zwischengeschaltete Ventilbrücke zwei Gaswechselventile betätigen.

Die Kraftübertragungsvorrichtung 10 weist zusätzlich eine Aufnahme 58 für eine Hebelachse (Kipphebelachse) und einen Nockenfolger 60 in Form einer drehbar gelagerten Rolle auf.

In der Figur 3 ist zudem gut sichtbar, dass die Aufnahme 16 als ein Durchgangsloch mit einem ersten zylindrischen Bereich 16A und einem zweiten zylindrischen Bereich 16B ausgebildet ist. Im zweiten zylindrischen Bereich 16B ist der Bereich des Stellkolbens 22 mit dem Entlüftungskanal 40 verschiebbar gelagert.

In den Figuren 3 bis 5 ist zudem gezeigt, dass eine Steuerfluidzuführung (gestrichelte Linie in Figur 4) separat von einer Schmierfluidzuführung (gepunktete Linie in Figur 4) vorgesehen sein kann. Die Steuerfluidzuführung zum selektiven hydraulischen Beaufschlagung der Sperrkolben 22, 24 (siehe Figuren 1 und 2) weist einen Steuerfluidkanal 62 auf. Der Steuerfluidkanal 62 mündet in die erste Umfangsnut 42. Die Schmierfluidzuführung weist einen Schmierfluidkanal 64 auf. Der Schmierfluidkanal 64 dient insbesondere zum Zuführen eines Schmierfluids (z. B. Schmieröl) zu der hydraulischen Ventilspielausgleichseinrichtung 26. Der Schmierfluidkanal 64 mündet in eine zweite Umfangsnut 66 der Aufnahme 16. Im montierten Zustand sind die Bohrungsenden der Kanäle bspw. mit Verschlussstopfen oder Verschlusskugeln verschlossen (nicht dargestellt).

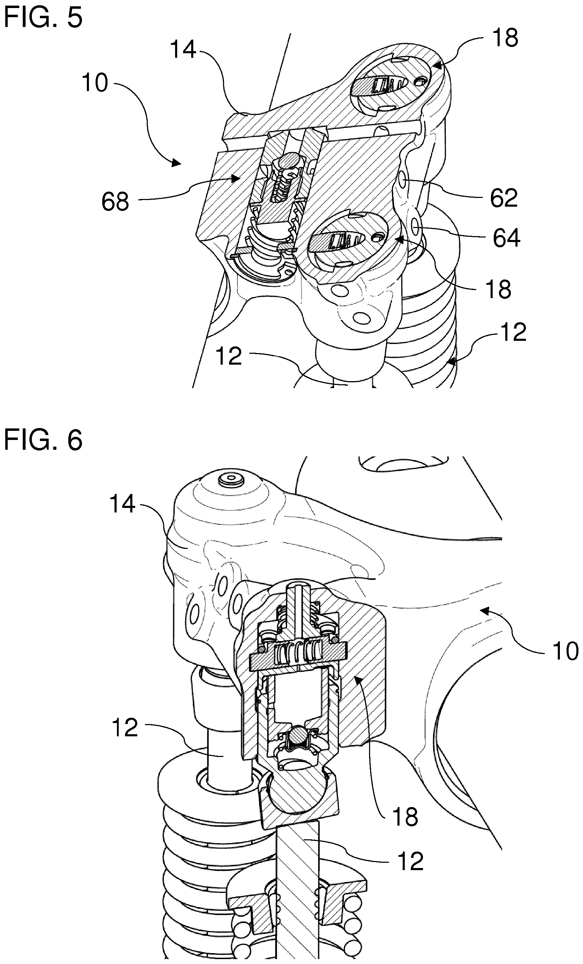

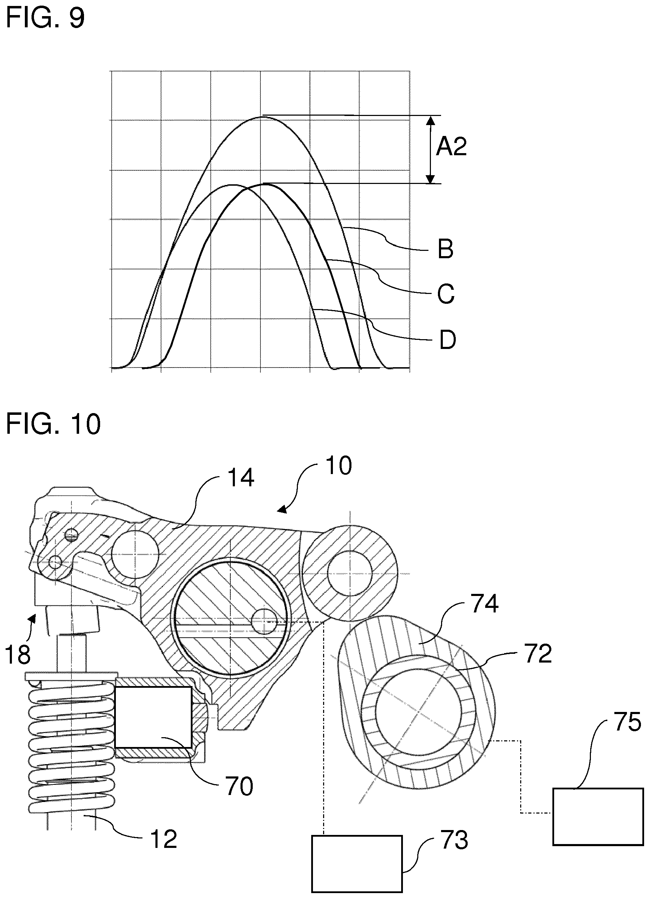

In der Figuren 4 und 5 ist ein optionales Steuerventil 68 der Kraftübertragungsvorrichtung 10 dargestellt. Das Steuerventil 68 ist in der Steuerfluidzuführung vorgesehen. Stromaufwärts des Steuerventils 68 kann ein Magnetventil 73 (siehe Figur 10) vorgesehen sein, über das Steuerfluid (z. B. Steueröl) mit einem Aktivierungsfluiddruck zuführbar ist. Das Steuerfluid wird immer dann zugeführt, wenn gewünscht ist, eine Verschiebebewegung des Stellkolbens 20 zwischen der ersten Position und der zweiten Position freizugeben. Stromabwärts des Steuerventils 68 ist der Steuerfluidkanal 62 angeordnet. Das Steuerventil 68 kann als Rücklaufsperre dienen. Bspw. kann das Steuerventil als Rückschlagventil ausgebildet sein, um zu verhindern, dass Steuerfluid aus dem Steuerfluidkanal 62 (dem Steuerfluidraum 38) zurückfließt.

In einigen Ausführungsformen können die Steuerfluidzuführung und die Schmierfluidzuführung auch gemeinsam miteinander vorgesehen sein.

Die Figur 6 zeigt nochmals die Kraftübertragungsvorrichtung 10 mit zwei Vorrichtungen 18 zum zweistufigen Verändern des Ventilhubs.

Hierbei ist hervorzuheben, dass die Vorrichtung 18 aufgrund der zylindrischen Ausbildungen der Aufnahme 16, der ersten Umfangsnut 42 und des Stellkolbens 20 in jeglicher Drehposition (Rotationsposition) um eine Längsachse der Vorrichtung 18 montierbar ist. Im Einzelnen kann die Vorrichtung 18 in jeglicher Drehposition um deren Längsachse einfach von unten in die Aufnahme 16 geschoben werden. Die Sperrkolben 22, 24 sichern dann die Vorrichtung 18 in der Aufnahme 16 durch Abstützung in der ersten Umfangsnut 42 axial.

Nachfolgend ist die Funktionsweise der Vorrichtung 18 unter Bezugnahme auf die Figuren 1, 6, 7 und 8 beschrieben.

In Figur 1 ist die Vorrichtung 18 in einem Zustand gezeigt, der sich einstellt, wenn kein Steuerfluid zugeführt wird. Die Steuerfluidzuführung (das Magnetventil in der Steuerfluidzuführung) ist nicht aktiv geschaltet. Die Sperrkolben 22, 24 sind ausgefahren. Die Sperrkolben 22, 24 werden von dem elastischen Element 44 in die erste Umfangsnut 42 gedrückt. Die Sperrkolben 22, 24 legen den Stellkolben 20 in der ersten Position fest. Gelangt der Nockenfolger 60 (siehe Figur 3) in Kontakt mit einem Ventilhubbereich eines Nockens der Nockenwelle, wird die Nockenkontur des Nockens ohne Verschiebung des Stellkolbens 20 (durch Formschluss in der Vorrichtung 18) auf das Gaswechselventil 12 übertragen. Der Formschluss in der Kraftübertragungseinrichtung wird zwischen der ersten Umfangsnut 42 und den Sperrkolben 22, 24 hergestellt. Die hydraulische Ventilspielausgleichseinrichtung 26 gleicht ein Ventilspiel aus. Der erzeugte Ventilhub kann bspw. der Kurve B in Figur 9 entsprechen.

Hervorzuheben ist hierbei, dass in dem nicht-aktivierten Zustand der Vorrichtung 18, die elastischen Elemente 34 und 44 die Kolben 20, 22, 24 in ihren Ausgangspositionen festlegen, sodass eine versagenssichere Funktionalität (Fail-safe) vorliegt.

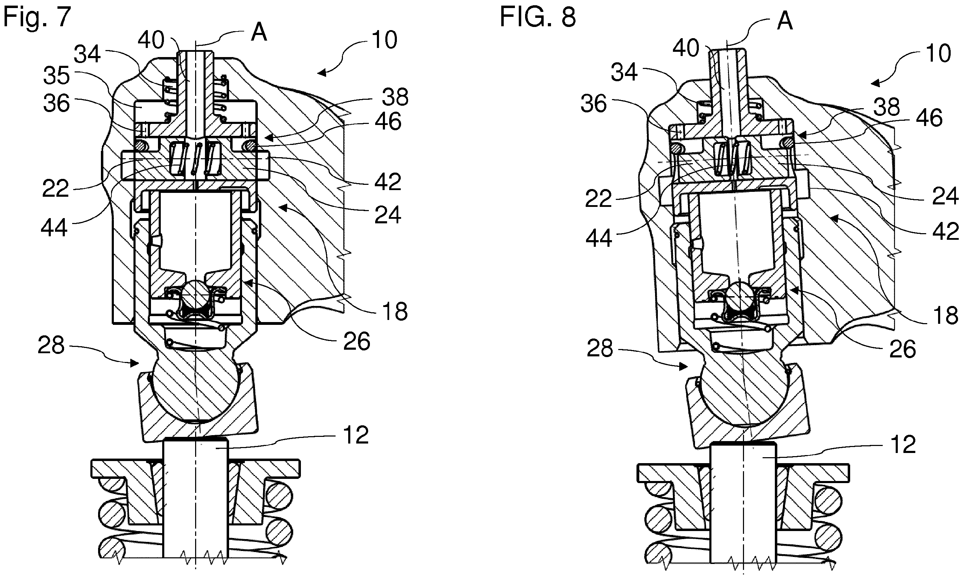

Unter Bezugnahme auf die Figuren 7 und 8 ist nachfolgend das Verhalten der Kraftübertragungsvorrichtung 10 bei aktivierter Vorrichtung 18 beschrieben. Zur besseren Darstellbarkeit sind in den Figuren 7 und 8 nicht alle Bauteile mit Bezugszeichen versehen.

In Figur 7 ist die Vorrichtung 18 in einem Übergangszustand gezeigt, der eingenommen wird, wenn Steuerfluid zugeführt wird und der Nocken der Nockenwelle im Grundkreisbereich ist. Die Steuerfluidzuführung (das Magnetventil in der Steuerfluidzuführung) ist aktiv geschaltet. Die Sperrkolben 22, 24 werden durch das in die erste Umfangsnut 42 zugeführte Steuerfluid in einer Richtung zu der Längsachse A gedrückt.

Die Verschiebung der Sperrkolben 22, 24 erfolgt nur im Grundkreisbereich des Nockens der Nockenwelle, wenn eine wesentliche kraftfreie Wirkverbindung zwischen dem Nocken, dem Hauptkörper 14, der Vorrichtung 18 und dem Gaswechselventils 12 vorliegt. Im Ventilhubbereich des Nockens drückt die Ventilfederkraft von unten auf die Vorrichtung 18. Die Sperrkolben 22, 24 werden in einer Richtung entlang der Längsachse A gegen die erste Umfangsnut 42 gedrückt. Der Aktivierungsfluiddruck ist nicht hoch genug, um die Haftreibungskraft zwischen den Sperrkolben 22, 24 und der ersten Umfangsnut 42 zu überwinden. Im Grundkreisbereich des Nockens drückt keine wesentliche Ventilkraft von unten auf die Vorrichtung 18. Die Sperrkolben 22, 24 können durch den Aktivierungsfluiddruck die Haftreibung überwinden und nach innen gedrückt werden. Da die Vorrichtung 18 nur kraftfrei schalten kann, ist keine gezielte Schaltung zu einem bestimmten Zeitpunkt notwendig. Insbesondere ist keine aufwendige kurbelwinkelabhängige Schaltung einzelner Zylinder notwendig. Der Aktivierungsfluiddruck kann auch im Ventilhubbereich angelegt werden, wobei eine Umschaltung dann erst später im Grundkreisbereich stattfindet, wenn die Vorrichtung 18 weitestgehend kraftfrei ist (kraftfreie Umschaltung). Damit ist eine zylinderselektive Schaltung nicht notwendig, was die Komplexität erheblich verringert.

Im Einzelnen bewegt sich der erste Sperrkolben 22 aus der dritten Position (Figur 1) in eine vierte Position (Figur 7). Der zweite Sperrkolben 24 bewegt sich aus derfünften Position (Figur 1) in eine sechste Position (Figur 7). Wenn der erste Sperrkolben 22 in der vierten Position und der zweite Sperrkolben 24 in der fünften Position ist, sind die Sperrkolben 22, 24 nicht mehr in der ersten Umfangsnut 42 gelagert. In diesem Zustand ist eine Bewegung des Stellkolbens 20 zwischen der ersten Position und der zweiten Position freigegeben (nicht mehr gesperrt).

Während die Sperrkolben 22, 24 nach innen gedrückt werden, fließt Steuerfluid aus dem Steuerfluidraum 38 und der Steuerfluidzuführung durch die Kanäle 36 in die Dämpfungskammer 35. Der Bereich um die Verdrehsicherung 46 ist nicht fluiddicht, sodass Steuerfluid von der Steuerfluidzuführung an den Sperrkolben 22, 24 vorbei zu den Kanälen 36 zugeführt wird.

Erneut gleicht die hydraulische Ventilspielausgleichseinrichtung 26 ein Ventilspiel im Kontaktkörper 28 aus. An dieser Stelle ist noch zu erwähnen, dass für eine richtige Funktionsweise der hydraulischen Ventilspielausgleichseinrichtung 26 die Rückstellkräfte der elastischen Elemente der hydraulischen Ventilspielausgleichseinrichtung 26 und der Kolben 20, 22, 24 aufeinander abgestimmt sein müssen. Alternativ kann auch ein zusätzlicher Axialanschlag zum axialen Begrenzen eines Wegs des Stellkolbens 20 verwendet werden. Der Axialanschlag kann bspw. einen Ringkörper aufweisen, wie in Figur 1 mit dem Bezugszeichen 47 angegeben ist.

In Figur 8 ist die Vorrichtung 18 in einem Zustand gezeigt, der nach dem Übergangszustand von Figur 7 eingenommen wird, wenn weiterhin Steuerfluid zugeführt wird und der Nocken der Nockenwelle im Ventilhubbereich ist. Die Steuerfluidzuführung (das Magnetventil in der Steuerfluidzuführung) ist weiterhin aktiv geschaltet.

Schwenkt die Kraftübertragungseinrichtung um die Schwenkachse bewirkt die Federkraft des Gaswechselventils 12, dass der freigegebene Stellkolben 20 sich von der ersten Position (Figuren 1 und 7) in die zweite Position bewegt (Figur 8). Der Stellkolben 20 vollführt dabei einen Leerweg (sog. Lost-Motion-Funktion), um den der Ventilhub des Gaswechselventils 12 verringert wird. Mit der Bewegung des Stellkolbens 20 zwischen der ersten Position und der zweiten Position bewegen sich die Sperrkolben 22 und 24, die hydraulische Ventilspielausgleichseinrichtung 26 und der Kontaktkörper 28 entlang der Längsachse A. Der Formschluss in der Kraftübertragungseinrichtung 18 stellt sich jetzt zwischen dem Bodenbereich 30 und dem Stellkolben 20 ein.

Während der Bewegung des Stellkolbens 20 von der ersten Position zu der zweiten Position wird Steuerfluid aus der Dämpfungskammer 35 durch die Kanäle 36 in den Steuerfluidraum 38 zurück gedrückt. Die Kanäle 36 sind so ausgeführt, dass hierbei eine turbulente Strömung erzeugt wird. Z. B. nutzen die Kanäle 36 das Prinzip einer scharfkantigen Blende. Der Durchfluss und damit die Dämpfungseigenschaft des Steuerfluids ist somit viskositätsunabhängig. Das Ausströmen aus der Dämpfungskammer 35 und das Durchströmen durch die Kanäle 36 bewirkt einen Dämpfungseffekt im Bereich des Einlaufs des Ventilhubs, womit Verschleiß und schlechter Akustik durch Klappergeräusche vorgebeugt wird.

Ein Teil des Steuerfluids wird über den Entlüftungskanal 40 abgeführt. Es sollte beachtet werden, dass die Sperrkolben 22, 24 und/oder das elastische Element 44 so ausgeführt sein müssen, dass ein Fluidtransport aus dem Bereich des Steuerfluidraums 38 zwischen den Sperrkolben 22, 24 zu den Entlüftungskanal 40 ermöglicht wird. Beispielsweise kann das elastische Element 44 einen vollständigen flächigen Kontakt zwischen den Sperrkolben 22 und 24 verhindern. Ebenso ist es möglich, dass die Sperrkolben 22, 24 kronenartige Endbereiche aufweisen, die einander nicht abdichtend berühren können.

Die hydraulische Ventilspielausgleichseinrichtung 26 gleicht weiterhin ein Ventilspiel im Kontaktkörper 28 aus.

Im Grundkreisbereich bewegt sich der Stellkolben 20 von der zweiten Position zurück in die erste Position. Bei erneutem Erreichen des Ventilhubbereichs bewegt sich der Stellkolben 20 wieder von der ersten Position in die zweite Position. Der Zyklus wiederholt sich für jede Nockenwellenumdrehung der Nockenwelle solange die Steuerfluidzuführung aktiviert ist. Im aktivierten Zustand der Vorrichtung 18 kann ein Ventilhub gemäß der Ventilhubkurve C in Figur 9 erreicht werden.

Der Leerweg des Stellkolbens 20 bei aktiv geschalteter Vorrichtung 18 entspricht einem Abstand A1 in Figur 1. Dieser Leerweg entspricht einem Tothub A2 (siehe Figur 9), um den der Ventilhub zwischen der Kurve B und der Kurve C (und Kurve D) verringert wird.

Kombiniert man die Kraftübertragungsvorrichtung 10 zusätzlich mit einem Nockenwellenphasenversteller zum Verstellen der Phase der Nockenwelle, so kann diese Kurve C verschoben werden. So kann beispielsweise die Kraftübertragungseinrichtung 10 in Kombination mit einem Nockenwellenphasenversteller einen Ventilhubverlauf gemäß der Kurve D erzeugen. Damit kann beispielsweise zwischen einem Normalbetrieb für ein oder mehrere Einlassventile und einem Millerbetrieb mit vorgezogenen Schließzeitpunkt des einen oder der mehreren Einlassventile durch Aktivieren und Deaktivieren der Vorrichtung 18 umgeschaltet werden.

Die Figur 10 zeigt ein zusätzliches optionales Dämpfungsbauteil 70, mit dem ein sanftes Ventilaufsetzen bei aktivierter Vorrichtung 18 ermöglicht wird. Das Dämpfungsbauteil 70 kann selektiv in Eingriff mit beispielsweise dem Hauptkörper 14 der Kraftübertragungsvorrichtung 10 gelangen, um einen sanften Auslauf der Ventilhubkurve zu ermöglichen. Das Dämpfungsbauteil 70 kann beispielsweise einen hydraulischen Kolben mit einem Dämpfungsfluidraum verwenden, ähnlich einem normalen PKW-Stoßdämpfer.

In Figur 10 ist zusätzlich die Nockenwelle 72 mit dem Nocken 74 gezeigt. Ergänzend ist rein schematisch ein Nockenwellenphasenversteller 75 zum Verstellen einer Phase der Nockenwelle 72 gezeigt. Zusätzlich ist schematisch ein Magnetventil 73 gezeigt, mit dem eine Zuführung von Steuerfluid zu der Vorrichtung 18 steuerbar ist. Das Magnetventil 73 steht in Fluidverbindung mit der Steuerfluidzuführung der Kraftübertragungsvorrichtung 10, insbesondere über einen Schmierfluidkanal in einer Hebelachse der Kraftübertragungsvorrichtung 10.

Die Figur 11 zeigt eine modifizierte Ausführungsform der Vorrichtung 18 zum zweistufigen Verändern eines Ventilhubs eines Gaswechselventils. Die Vorrichtung 18 in Figur 11 weist keine hydraulische Ventilspielausgleichseinrichtung auf. Stattdessen weist die Vorrichtung 18 einen Hohlkörper 76 auf. Der Hohlkörper 76 ist in dem Hauptkörper 14 beispielsweise über ein Gewinde gesichert (eingeschraubt). Über den Hohlkörper 76 kann ein Ventilspiel am Kontaktkörper 28 manuell eingestellt werden. Der Hohlkörper 76 wirkt somit als mechanische (manuelle) Ventilspielausgleichseinrichtung. Die Kontermutter 78 dient nur zur Schraubensicherung, damit der Hohlkörper 76 sich nicht verdrehen kann. Ansonsten weist die Vorrichtung 18 von Figur 11 eine ähnliche Bau- und Funktionsweise wie die Vorrichtung 18 der Figuren 1 bis 9 auf. Insbesondere sind in dem Hohlkörper 76 der Stellkolben 20, die Sperrkolben 22 und 24, die elastischen Elemente 34 und 44, die Dämpfungskammer 35, die Verdrehsicherung 46 usw. ähnlich zu der Ausführungsform der Figuren 1 bis 9 vorgesehen, sodass auf eine Wiederholung von deren Funktionsweise hier verzichtet wird. Zusätzlich kann auch die Ausführungsform nach Figur 11 bspw. einen Axialanschlag (nicht gesondert dargestellt in Figur 11) zum Begrenzen einer axialen Verschiebung des Stellkolbens 20 ähnlich zu dem Axialanschlag 47, der in Figur 1 gezeigt ist, aufweisen.

### Bezugszeichenliste

- 10: Kraftübertragungsvorrichtung
- 12: Gaswechselventil
- 14: Hauptkörper
- 16: Aufnahme
- 16A: Erster Aufnahmebereich
- 16B: Zweiter Aufnahmebereich
- 18: Vorrichtung zur zweistufigen Anpassung eines Ventilhubs
- 20: Stellkolben
- 22: Erster Sperrkolben
- 24: Zweiter Sperrkolben
- 26: Ventilspielausgleichseinrichtung (HVA-Element)
- 28: Kontaktkörper
- 28A: Kugelfuß
- 28B: Kugelaufnahme
- 30: Bodenbereich
- 32: Umfangswandfläche
- 34: Erstes elastisches Element
- 35: Dämpfungskammer
- 36: Kanal
- 38: Steuerfluidraum
- 40: Entlüftungskanal
- 42: Erste Umfangsnut
- 44: Zweites elastisches Element
- 46: Verdrehsicherung
- 47: Axialanschlag
- 48: Schmierfluidraum
- 50: Rückschlagkugel
- 52: Rückstellfeder
- 54: Hochdruckraum
- 56: Kanal
- 58: Aufnahme
- 60: Nockenfolger
- 62: Steuerfluidkanal
- 64: Schmierfluidkanal
- 66: Zweite Umfangsnut
- 68: Steuerventil
- 70: Dämpfungsbauteil
- 72: Nockenwelle
- 73: Magnetventil
- 74: Nocken
- 75: Nockenwellenphasenversteller
- 76: Hohlkörper
- 78: Kontermutter

- A: Längsachse
- A1: Leerweg
- A2: Tothub
- B: Ventilhubkurve
- C: Ventilhubkurve
- D: Ventilhubkurve

## Patentansprüche

1. Kraftübertragungsvorrichtung (10), insbesondere Kipphebel oder Schlepphebel, zum Herstellen einer Wirkverbindung zwischen einer Nockenwelle (72) und einem Gaswechselventil (12), insbesondere Einlassventil, einer Brennkraftmaschine, aufweisend:
einen Hauptkörper (14) mit einer, insbesondere zylindrischen, Aufnahme (16), die sich entlang einer Längsachse (A) erstreckt;
einen, insbesondere hydraulischen, Stellkolben (20), der hin- und herbewegbar zwischen einer ersten Position und einer zweiten Position entlang der Längsachse (A) in der Aufnahme (16) vorgesehen ist;
einen Kontaktkörper (28) zum Betätigen des Gaswechselventils (12), der mit dem Stellkolben (20) so in Wirkverbindung steht, dass eine Bewegung des Stellkolbens (20) entlang der Längsachse (A) zu einer Bewegung des Kontaktkörpers (28) entlang der Längsachse (A) zum Verändern eines Ventilhubs des Gaswechselventils (12) führt;
einen ersten, insbesondere hydraulischen, Sperrkolben (22), der in einer Radialrichtung bezüglich der Längsachse (A) hin- und herbewegbar zwischen einer dritten Position, in der der erste Sperrkolben (22) den Stellkolben (20) in der ersten Position sperrt, und einer vierten Position, in der der erste Sperrkolben (22) eine Bewegung des Stellkolbens (20) zwischen der ersten Position und der zweiten Position freigibt, in der Aufnahme (16) vorgesehen ist,
**gekennzeichnet durch:**
eine mit einem Steuerfluid füllbare Dämpfungskammer (35), die bei Bewegung des Stellkolbens (20) von der ersten Position zu der zweiten Position zum Dämpfen der Bewegung des Stellkolbens (20) entleert wird, wobei der erste Sperrkolben (22) in einem Steuerfluidraum (38) des Stellkolbens (20) bewegbar in der Radialrichtung bezüglich der Längsachse (A) der Aufnahme (16) vorgesehen ist und die Dämpfungskammer (35) mit dem Steuerfluidraum (38) des Stellkolbens (20) über mindestens einen Kanal (36) in Fluidverbindung steht.

2. Kraftübertragungsvorrichtung (10) nach Anspruch 1, ferner aufweisend:
einen zweiten, insbesondere hydraulischen, Sperrkolben (24), der, insbesondere dem ersten Sperrkolben (22) gegenüberliegend, in einer Radialrichtung bezüglich der Längsachse (A) hin- und herbewegbar zwischen einer fünften Position, in der der zweite Sperrkolben (24) den Stellkolben (20) in der ersten Position sperrt, und einer sechsten Position, in der der zweite Sperrkolben (24) eine Bewegung des Stellkolbens (20) zwischen der ersten Position und der zweiten Position freigibt, in der Aufnahme (16) vorgesehen ist.

3. Kraftübertragungsvorrichtung (10) nach Anspruch 1 oder Anspruch 2, wobei das Sperren des Stellkolbens (20) in der ersten Position einerseits und das Freigegeben der Verschiebung des Stellkolbens (20) zwischen der ersten Position und der zweiten Position andererseits eine zweistufige Ventilhubvariabilität zum Erzeugen von zwei unterschiedlichen Ventilhubverläufen des Gaswechselventils (12) ermöglicht.

4. Kraftübertragungsvorrichtung (10) nach einem der vorherigen Ansprüche, wobei:
der Stellkolben (20) elastisch vorgespannt in einer Richtung zu der ersten Position ist; und/oder
der erste Sperrkolben (22) elastisch vorgespannt in einer Richtung zu der dritten Position ist; und/oder
der zweite Sperrkolben (24) elastisch vorgespannt in einer Richtung zu der fünften Position ist; und/oder
der erste Sperrkolben (22) und der zweite Sperrkolben (24) elastisch gegeneinander abgestützt sind.

5. Kraftübertragungsvorrichtung (10) nach einem der vorherigen Ansprüche, wobei die Aufnahme (16) eine Nut (42), insbesondere eine zylindrische Umfangsnut um die Längsachse (A), aufweist, wobei:
der erste Sperrkolben (22) in der dritten Position in der Nut (42) gelagert ist, sodass eine Bewegung des ersten Sperrkolbens (22) entlang der Längsachse (A) gesperrt ist, und in der vierten Position außerhalb der Nut (42) gelagert ist, sodass eine Bewegung des ersten Sperrkolbens (22) entlang der Längsachse (A) freigegeben ist; und/oder
der zweite Sperrkolben (24) in der fünften Position in der Nut (42) gelagert ist, sodass eine Bewegung des zweiten Sperrkolbens (24) entlang der Längsachse (A) gesperrt ist, und in der vierten Position außerhalb der Nut (42) gelagert ist, sodass eine Bewegung des ersten Sperrkolbens (24) entlang der Längsachse (A) freigegeben ist.

6. Kraftübertragungsvorrichtung (10) nach einem der vorherigen Ansprüche, wobei bei Beaufschlagung des Stellkolbens (20) über den Kontaktkörper (28) in einer Richtung entlang der Längsachse (A) zu der zweiten Position, der Stellkolben (20) einen Leerweg von der ersten Position zu der zweiten Position vollführt, um den sich der Ventilhub des Gaswechselventils (12) verringert, wenn der erste Sperrkolben (22) und/oder der zweite Sperrkolben (24) die Bewegung des Stellkolbens (20) zwischen der ersten Position und der zweiten Position freigibt.

7. Kraftübertragungsvorrichtung (10) nach einem der vorherigen Ansprüche, wobei:
der erste Sperrkolben (22), insbesondere hydraulisch durch Zuführen eines Steuerfluids, zum Bewegen von der dritten Position zu der vierten Position beaufschlagbar ist; und/oder
der zweite Sperrkolben (24), insbesondere hydraulisch durch Zuführen eines Steuerfluids, zum Bewegen von der fünften Position zu der sechsten Position beaufschlagbar ist.

8. Kraftübertragungsvorrichtung (10) nach einem der vorherigen Ansprüche, wobei der erste Sperrkolben (22) und/oder der zweite Sperrkolben (24) in oder an dem Stellkolben (20) in der Radialrichtung bezüglich der Längsachse (A) geführt ist.

9. Kraftübertragungsvorrichtung (10) nach einem der vorherigen Ansprüche, wobei
nur bei im Wesentlichen kraftfreier Wirkverbindung von der Nockenwelle (72) über die Kraftübertragungsvorrichtung (14) zu dem Gaswechselventil (12), eine Bewegung des ersten Sperrkolbens (22) und/oder des zweiten Sperrkolbens (24) in der Radialrichtung bezüglich der Längsachse (A) freigegeben ist; und/oder
bei Beaufschlagung des ersten Sperrkolbens (22) und/oder zweitens Sperrkolbens (24) über den Kontaktkörper (28) in einer Richtung entlang der Längsachse (A) zu der zweiten Position, eine Bewegung des ersten Sperrkolbens (22) aus der dritten Position in die vierte Position und/oder des zweiten Sperrkolbens (24) aus der fünften Position in die sechste Position gesperrt ist, insbesondere durch eine Haftreibung aufgrund der Ventilöffnungskraft zwischen des ersten Sperrkolbens (22) und/oder des zweiten Sperrkolbens (24) an der Nut (42).

10. Kraftübertragungsvorrichtung (10) nach einem der vorherigen Ansprüche, wobei die Kraftübertragungsvorrichtung (10) eine Steuerfluidversorgung und eine separat dazu vorgesehene Schmierfluidversorgung aufweist.

11. Kraftübertragungsvorrichtung (10) nach einem der vorherigen Ansprüche, wobei:
die mit einem Steuerfluid füllbare Dämpfungskammer (35) bei Bewegung des Stellkolbens (20) von der ersten Position zu der zweiten Position unter Erzeugung einer turbulenten Strömung zum Dämpfen der Bewegung des Stellkolbens (20) entleert wird, wobei, vorzugsweise, die Dämpfungskammer (35) von dem Stellkolben (20) und der Aufnahme (16) begrenzt wird.

12. Kraftübertragungsvorrichtung (10) nach einem der vorherigen Ansprüche, ferner aufweisend:
eine Verdrehsicherung (46), die eine Verdrehung des ersten Sperrkolbens (22) und/oder des zweiten Sperrkolbens (24) sperrt.

13. Kraftübertragungsvorrichtung (10) nach einem der vorherigen Ansprüche, ferner aufweisend:
eine, insbesondere hydraulische oder mechanische, Ventilspielausgleichseinrichtung (26, 76), die in Wirkverbindung mit dem Stellkolben (20) und dem Kontaktkörper (28) zum Ausgleichen eines Ventilspiels am Kontaktkörper (28) angeordnet ist.

14. Verwendung der Kraftübertragungsvorrichtung (10) nach einem der vorherigen Ansprüche zum Erzeugen eines reduzierten Ventilhubs für mindestens ein Einlassventil oder Auslassventil (12), insbesondere in Kombination mit einem Nockenwellenphasenversteller (75) für die Nockenwelle (72) zum Erzeugen einer Millersteuerzeit für mindestens ein Einlassventil.

15. Kraftfahrzeug, insbesondere Nutzfahrzeug, aufweisend die Kraftübertragungsvorrichtung (10) nach einem der Ansprüche 1 bis 13.

## Claims

1. A force transmission apparatus (10), in particular a rocker arm or a drag lever, for establishing an operative connection between a camshaft (72) and a gas exchange valve (12), in particular an inlet valve, of an internal combustion engine, comprising:
a main body (14) with an, in particular cylindrical, receptacle (16) which extends along a longitudinal axis (A) ;
an, in particular hydraulic, actuating piston (20) which is provided in the receptacle (16) such that it can be moved to and fro between a first position and a second position along the longitudinal axis (A);
a contact body (28) for actuating the gas exchange valve (12), which contact body (28) is operatively connected to the actuating piston (20) in such a way that a movement of the actuating piston (20) along the longitudinal axis (A) leads to a movement of the contact body (28) along the longitudinal axis (A) in order to change a valve stroke of the gas exchange valve (12);
a first, in particular hydraulic, locking piston (22) which is provided in the receptacle (16) such that it can be moved to and fro in a radial direction with regard to the longitudinal axis (A) between a third position, in which the first locking piston (22) locks the actuating piston (20) in the first position, and a fourth position, in which the first locking piston (22) releases a movement of the actuating piston (20) between the first position and the second position, **characterized by**:
a damping chamber (35) which can be filled with a control fluid and, in the case of movement of the actuating piston (20) from the first position to the second position, is emptied in order to damp the movement of the actuating piston (20), the first locking piston (22) being provided in a control fluid space (38) of the actuating piston (20) such that it can be moved in the radial direction with regard to the longitudinal axis (A) of the receptacle (16), and the damping chamber (35) being connected fluidically to the control fluid space (38) of the actuating piston (20) via at least one channel (36).

2. The force transmission apparatus (10) according to Claim 1, comprising, furthermore:
a second, in particular hydraulic, locking piston (24) which is provided in the receptacle (16), in particular so as to lie opposite the first locking piston (22), such that it can be moved to and fro in a radial direction with regard to the longitudinal axis (A) between a fifth position, in which the second locking piston (24) locks the actuating piston (20) in the first position, and a sixth position, in which the second locking piston (24) releases a movement of the actuating piston (20) between the first position and the second position.

3. The force transmission apparatus (10) according to Claim 1 or Claim 2, the locking of the actuating piston (20) in the first position firstly and the releasing of the displacement of the actuating piston (20) between the first position and the second position secondly making a two-step valve stroke variability possible in order to generate two different valve stroke profiles of the gas exchange valve (12).

4. The force transmission apparatus (10) according to one of the preceding claims:
the actuating piston (20) being prestressed elastically in a direction towards the first position; and/or
the first locking piston (22) being prestressed elastically in a direction towards the third position; and/or
the second locking piston (24) being prestressed elastically in a direction towards the fifth position; and/or
the first locking piston (22) and the second locking piston (24) being supported elastically against one another.

5. The force transmission apparatus (10) according to one of the preceding claims, the receptacle (16) having a groove (42), in particular a cylindrical circumferential groove about the longitudinal axis (A):
the first locking piston (22) being mounted in the groove (42) in the third position, with the result that a movement of the first locking piston (22) along the longitudinal axis (A) is locked, and being mounted outside the groove (42) in the fourth position, with the result that a movement of the first locking piston (22) along the longitudinal axis (A) is released; and/or
the second locking piston (24) being mounted in the groove (42) in the fifth position, with the result that a movement of the second locking piston (24) along the longitudinal axis (A) is locked, and being mounted outside the groove (42) in the fourth position, with the result that a movement of the first locking piston (24) along the longitudinal axis (A) is released.

6. The force transmission apparatus (10) according to one of the preceding claims, the actuating piston (20) performing, in the case of loading of the actuating piston (20) via the contact body (28) in a direction along the longitudinal axis (A) to the second position, an idle travel from the first position to the second position, by which idle travel the valve stroke of the gas exchange valve (12) decreases when the first locking piston (22) and/or the second locking piston (24) release/releases the movement of the actuating piston (20) between the first position and the second position.

7. The force transmission apparatus (10) according to one of the preceding claims:
it being possible for the first locking piston (22) to be loaded, in particular hydraulically by way of a control fluid being fed in, in order to move from the third position to the fourth position; and/or
it being possible for the second locking piston (24) to be loaded, in particular hydraulically by way of a control fluid being fed in, in order to move from the fifth position to the sixth position.

8. The force transmission apparatus (10) according to one of the preceding claims, the first locking piston (22) and/or the second locking piston (24) being guided in or on the actuating piston (20) in the radial direction with regard to the longitudinal axis (A).

9. The force transmission apparatus (10) according to one of the preceding claims,
a movement of the first locking piston (22) and/or the second locking piston (24) in the radial direction with regard to the longitudinal axis (A) being released only in the case of a substantially force-free operative connection from the camshaft (72) via the force transmission apparatus (14) to the gas exchange valve (12); and/or,
in the case of loading of the first locking piston (22) and/or second locking piston (24) via the contact body (28) in a direction along the longitudinal axis (A) towards the second position, a movement of the first locking piston (22) out of the third position into the fourth position and/or of the second locking piston (24) out of the fifth position into the sixth position being locked, in particular by way of static friction on account of the valve opening force between the first locking piston (22) and/or the second locking piston (24) on the groove (42).

10. The force transmission apparatus (10) according to one of the preceding claims, the force transmission apparatus (10) having a control fluid supply and a lubricant supply which is provided separately therefrom.

11. The force transmission apparatus (10) according to one of the preceding claims:
the damping chamber (35) which can be filled with a control fluid being emptied in the case of movement of the actuating piston (20) from the first position to the second position with generation of a turbulent flow in order to damp the movement of the actuating piston (20), the damping chamber (35) preferably being delimited by the actuating piston (20) and the receptacle (16).

12. The force transmission apparatus (10) according to one of the preceding claims, comprising, furthermore:
an anti-rotation safeguard (46) which locks a rotation of the first locking piston (22) and/or the second locking piston (24).

13. The force transmission apparatus (10) according to one of the preceding claims, comprising, furthermore:
an, in particular hydraulic or mechanical, valve clearance compensation device (26, 76) which is arranged in an operative connection to the actuating piston (20) and the contact body (28) for the compensation of a valve clearance on the contact body (28).

14. The use of the force transmission apparatus (10) according to one of the preceding claims for generating a reduced valve stroke for at least one inlet valve or outlet valve (12), in particular in combination with a camshaft phase adjuster (75) for the camshaft (72) in order to generate a Miller control time for at least one inlet valve.

15. A motor vehicle, in particular a utility vehicle, comprising the force transmission apparatus (10) according to one of Claims 1 to 13.

## Revendications

1. Dispositif de transmission de force (10), en particulier culbuteur ou levier oscillant, permettant de réaliser une liaison fonctionnelle entre un arbre à cames (72) et une soupape d'échange de gaz (12), en particulier une soupape d'admission, d'un moteur à combustion interne, comprenant :
un corps principal (14) doté d'un logement (16) en particulier cylindrique qui s'étend le long d'un axe longitudinal (A) ;
un piston de réglage (20) en particulier hydraulique qui est prévu dans le logement (16) de manière à pouvoir être animé d'un mouvement de va-et-vient entre une première position et une deuxième position le long de l'axe longitudinal (A) ;
un corps de contact (28) pour l'actionnement de la soupape d'échange de gaz (12), lequel est en liaison fonctionnelle avec le piston de réglage (20) de telle sorte qu'un mouvement du piston de réglage (20) le long de l'axe longitudinal (A) mène à un mouvement du corps de contact (28) le long de l'axe longitudinal (A) pour modifier une course de la soupape d'échange de gaz (12) ;
un premier piston de blocage (22) en particulier hydraulique, qui est prévu dans le logement (16) de manière à pouvoir être animé d'un mouvement de va-et-vient dans une direction radiale par rapport à l'axe longitudinal (A) entre une troisième position, dans laquelle le premier piston de blocage (22) bloque le piston de réglage (20) dans la première position, et une quatrième position, dans laquelle le premier piston de blocage (22) libère un mouvement du piston de réglage (20) entre la première position et la deuxième position, **caractérisé par** :
une chambre d'amortissement (35) pouvant être remplie d'un fluide de commande, laquelle chambre est vidée en cas de mouvement du piston de réglage (20) de la première position à la deuxième position pour l'amortissement du mouvement du piston de réglage (20), le premier piston de blocage (22) étant prévu de manière mobile dans un espace de fluide de commande (38) du piston de réglage (20) dans la direction radiale par rapport à l'axe longitudinal (A) du logement (16) et la chambre d'amortissement (35) étant en liaison fluidique avec l'espace de fluide de commande (38) du piston de réglage (20) par le biais d'au moins un canal (36).

2. Dispositif de transmission de force (10) selon la revendication 1, comprenant en outre :
un deuxième piston de blocage (24) en particulier hydraulique, qui est prévu dans le logement (16), en particulier de manière opposée au premier piston de blocage (22), de manière à pouvoir être animé d'un mouvement de va-et-vient dans une direction radiale par rapport à l'axe longitudinal (A) entre une cinquième position, dans laquelle le deuxième piston de blocage (24) bloque le piston de réglage (20) dans la première position, et une sixième position, dans laquelle le deuxième piston de blocage (24) libère un mouvement du piston de réglage (20) entre la première position et la deuxième position.

3. Dispositif de transmission de force (10) selon la revendication 1 ou la revendication 2, dans lequel le blocage du piston de réglage (20) dans la première position d'une part et la libération du déplacement du piston de réglage (20) entre la première position et la deuxième position d'autre part permet une variabilité de course de soupape en deux étapes pour produire deux profils de course de soupape différents de la soupape d'échange de gaz (12).

4. Dispositif de transmission de force (10) selon l'une des revendications précédentes, dans lequel :
le piston de réglage (20) est précontraint élastiquement dans une direction vers la première position ; et/ou
le premier piston de blocage (22) est précontraint élastiquement dans une direction vers la troisième position ; et/ou
le deuxième piston de blocage (24) est précontraint élastiquement dans une direction vers la cinquième position ; et/ou
le premier piston de blocage (22) et le deuxième piston de blocage (24) sont supportés élastiquement l'un contre l'autre.

5. Dispositif de transmission de force (10) selon l'une des revendications précédentes, dans lequel le logement (16) comprend une rainure (42), en particulier une rainure périphérique cylindrique autour de l'axe longitudinal (A), dans lequel :
le premier piston de blocage (22) est logé dans la rainure (42) dans la troisième position, de sorte qu'un mouvement du premier piston de blocage (22) le long de l'axe longitudinal (A) soit bloqué, et est logé à l'extérieur de la rainure (42) dans la quatrième position, de sorte qu'un mouvement du premier piston de blocage (22) le long de l'axe longitudinal (A) soit libéré ; et/ou
le deuxième piston de blocage (24) est logé dans la rainure (42) dans la cinquième position, de sorte qu'un mouvement du deuxième piston de blocage (24) le long de l'axe longitudinal (A) soit bloqué, et est logé à l'extérieur de la rainure (42) dans la quatrième position, de sorte qu'un mouvement du premier piston de blocage (24) le long de l'axe longitudinal (A) soit libéré.

6. Dispositif de transmission de force (10) selon l'une des revendications précédentes, dans lequel, en cas de sollicitation du piston de réglage (20) par le biais du corps de contact (28) dans une direction le long de l'axe longitudinal (A) vers la deuxième position, le piston de réglage (20) effectue une course à vide de la première position à la deuxième position, course à vide de laquelle la course de la soupape d'échange de gaz (12) est réduite lorsque le premier piston de blocage (22) et/ou le deuxième piston de blocage (24) libère(nt) le mouvement du piston de réglage (20) entre la première position et la deuxième position.

7. Dispositif de transmission de force (10) selon l'une des revendications précédentes, dans lequel :
le premier piston de blocage (22) peut être sollicité en particulier hydrauliquement par alimentation en fluide de commande, pour le déplacement de la troisième position à la quatrième position ; et/ou
le deuxième piston de blocage (24) peut être sollicité en particulier hydrauliquement par alimentation en fluide de commande, pour le déplacement de la cinquième position à la sixième position.

8. Dispositif de transmission de force (10) selon l'une des revendications précédentes, dans lequel le premier piston de blocage (22) et/ou le deuxième piston de blocage (24) est/sont guidé(s) dans le piston de réglage (20) ou au niveau de celui-ci dans la direction radiale par rapport à l'axe longitudinal (A).

9. Dispositif de transmission de force (10) selon l'une des revendications précédentes, dans lequel,
seulement en cas de liaison fonctionnelle sensiblement sans force de l'arbre à cames (72) à la soupape d'échange de gaz (12) par le biais du dispositif de transmission de force (14), un mouvement du premier piston de blocage (22) et/ou du deuxième piston de blocage (24) dans la direction radiale par rapport à l'axe longitudinal (A) est libéré ; et/ou
en cas de sollicitation du premier piston de blocage (22) et/ou du deuxième piston de blocage (24) par le biais du corps de contact (28) dans une direction le long de l'axe longitudinal (A) vers la deuxième position, un mouvement du premier piston de blocage (22) à partir de la troisième position dans la quatrième position et/ou du deuxième piston de blocage (24) à partir de la cinquième position dans la sixième position est bloqué, en particulier par un frottement statique, dû à la force d'ouverture de soupape, entre le premier piston de blocage (22) et/ou le deuxième piston de blocage (24) et la rainure (42).

10. Dispositif de transmission de force (10) selon l'une des revendications précédentes, le dispositif de transmission de force (10) comprenant une alimentation en fluide de commande et une alimentation en fluide lubrifiant prévue séparément de celle-ci.

11. Dispositif de transmission de force (10) selon l'une des revendications précédentes, dans lequel :
la chambre d'amortissement (35) pouvant être remplie d'un fluide de commande est vidée en cas de déplacement du piston de réglage (20) de la première position à la deuxième position en générant un écoulement turbulent pour l'amortissement du mouvement du piston de réglage (20), dans lequel, de préférence, la chambre d'amortissement (35) est limitée par le piston de réglage (20) et le logement (16).

12. Dispositif de transmission de force (10) selon l'une des revendications précédentes, comprenant en outre :
une fixation anti-rotation (46) qui bloque une rotation du premier piston de blocage (22) et/ou du deuxième piston de blocage (24).

13. Dispositif de transmission de force (10) selon l'une des revendications précédentes, comprenant en outre :
un dispositif de compensation de jeu de soupape (26, 76), en particulier hydraulique ou mécanique, qui est disposé au niveau du corps de contact (28) en liaison fonctionnelle avec le piston de réglage (20) et le corps de contact (28) pour la compensation d'un jeu de soupape.

14. Utilisation du dispositif de transmission de force (10) selon l'une des revendications précédentes pour la production d'une course de soupape réduite pour au moins une soupape d'admission ou une soupape d'échappement (12), en particulier en combinaison avec un déphaseur (75) pour l'arbre à cames (72) pour produire un temps de commande de Miller pour au moins une soupape d'admission.

15. Véhicule automobile, en particulier véhicule utilitaire, comprenant le dispositif de transmission de force (10) selon l'une des revendications 1 à 13.
